# EUROPEAN PATENT SPECIFICATION

(11) **EP 3 934 163 B1**
(45) Date of publication and mention of the grant of the patent: **21.08.2024**
(21) Application number: 21181667.3
(22) Date of filing: 25.06.2021
(51) Int. Cl.: H04L 9/40, H04L 9/32, H04L 9/00

(54) **METHODS AND CONSENSUS NODES FOR BLOCK GENERATION**
VERFAHREN UND KONSENSUSKNOTEN ZUR BLOCKERZEUGUNG
PROCÉDÉS ET NOEUDS DE CONSENSUS POUR LA GÉNÉRATION DE BLOCS

(30) Priority: 03.07.2020 CN 202010629690
(43) Date of publication of application: 05.01.2022
(73) Proprietor: Alipay (Hangzhou) Information Technology Co., Ltd., Hangzhou, Zhejiang 310000 (CN)
(72) Inventor: LIAO, Xiaojun, Hangzhou, Zhejiang 310000 (CN)
(74) Representative: Goddar, Heinz J.

(56) References cited:
- WO-A1-2020/074456
- CN-A- 109 542 980
- US-A1- 2020 128 043

## Description

### TECHNICAL FIELD

This document relates to the field of blockchain technologies, and in particular, to a method and a consensus node for block generation.

### BACKGROUND

In a blockchain system, timestamps of all blocks need to be sequentially increasing like block numbers. At present, the vast majority of blockchain systems adopt a Byzantine Fault Tolerance (BFT) consensus protocol. In the BFT consensus protocol, a timestamp of a block is determined by a proposal initiator. If the proposal initiator is malicious, temporal orderliness of an entire chain of blocks is destroyed. In addition, for some blockchain services that require time tracing, service decisions can be executed only when timestamps of blocks are correct.

For this reason, currently there is an urgent need for a technical solution to ensure that a timestamp of a new block increases progressively with respect to a timestamp of a previous block.

US 2020/ 128043 A1 relates to a computer-implemented method for detecting a replay attack.

WO 2020/074456 A1 relates to blockchain timestamp agreements.

### SUMMARY

The invention is defined in the independent claims. Advantageous modifications are set forth in the dependent claims.

An objective of embodiments of this specification is to provide a method and a consensus node for block generation. This can ensure that a timestamp of a new block increases progressively with respect to a timestamp of a previous block.

In order to achieve the foregoing objective, embodiments of this specification are implemented in the following manner.

According to a first aspect, a method for block generation is provided, including:
initiating, by a first consensus node of a blockchain, a target consensus proposal carrying a first timestamp provided by the first consensus node;
determining, by a second consensus node of the blockchain after receiving the target consensus proposal, a second timestamp based on a time that the target consensus proposal is received;
performing, by the second consensus node, verification on the first timestamp based on a third timestamp of a local ending block and the second timestamp, to execute consensus logic on proposal data of the target consensus proposal after the verification succeeds; and
generating, by the first consensus node and the second consensus node if a consensus is reached on the target consensus proposal, a new block recording the proposal data of the target
consensus proposal, where a fourth timestamp of the generated new block is obtained through determining based on at least the first timestamp, and is not earlier than timestamps of other local blocks of a consensus node to which the new block belongs.

According to a second aspect, a consensus node of a blockchain is provided, including:
a timestamp obtaining module, configured to determine, after a target consensus proposal initiated by another consensus node of the blockchain is received, a second timestamp based on a time that the target consensus proposal is received, where the target consensus proposal carries a first timestamp provided by the another consensus node;
a consensus execution module, configured to perform verification on the first timestamp based on a third timestamp of a local ending block and the second timestamp, to execute consensus logic on proposal data of the target consensus proposal after the verification succeeds;
a block generation module, configured to generate, if a consensus is reached on the target consensus proposal, a new block recording the proposal data of the target consensus proposal, where a fourth timestamp of the generated new block is obtained through determining based on at least the first timestamp, and is not earlier than timestamps of other local blocks; and
a consensus initiation module, configured to: if a consensus proposal needs to be initiated based on a consensus protocol of the blockchain, initiate a consensus proposal carrying a locally provided timestamp.

In the solutions of the embodiments of this specification, when a target consensus node initiates a target consensus proposal, the target consensus proposal carries a first timestamp provided by the target consensus node. After receiving the target consensus proposal, another consensus node performs, based on a second timestamp of a local current moment and a third timestamp of a local ending block, verification on the first timestamp provided by the target consensus node, and after the verification succeeds, executes consensus logic on proposal data of the target consensus proposal. If a consensus is reached, each consensus node generates a new block of a fourth timestamp determined based on the first timestamp, to record the proposal data in the target consensus proposal. The entire solution can effectively ensure that a timestamp of a new block increases progressively with respect to a timestamp of a previous block, so that blocks in a blockchain are in an order of a time dimension, thereby ensuring that some blockchain services requiring time tracing can correctly execute service decisions.

### BRIEF DESCRIPTION OF THE DRAWINGS

To describe the technical solutions in the embodiments of this specification or in the prior art more clearly, the accompanying drawings required for describing the embodiments or the prior art are briefly introduced below. Apparently, the accompanying drawings in the following description show merely some embodiments of this specification, and a person of ordinary skill in the art may still derive other accompanying drawings from these accompanying drawings without creative efforts.
FIG. 1 is a first schematic flowchart of a method for block generation, according to an embodiment of this specification.
FIG. 2 is a second schematic flowchart of a method for block generation, according to an embodiment of this specification.
FIG. 3 is a schematic structural diagram of a consensus node, according to an embodiment of this specification.
FIG. 4 is a schematic structural diagram of a blockchain system, according to an embodiment of this specification.
FIG. 5 is a schematic structural diagram of an electronic device, according to an embodiment of this specification.

### DETAILED DESCRIPTION

To enable a person skilled in the art to better understand the technical solutions in this specification, the technical solutions of the embodiments of this specification will be described clearly and thoroughly below with reference to the accompanying drawings of the embodiments of this specification. Apparently, the described embodiments are merely some rather than all of the embodiments of this specification. All other embodiments obtained by a person of ordinary skill in the art based on the embodiments of this specification without creative efforts shall fall within the protection scope of this specification.

As described above, in a blockchain system, timestamps of all blocks need to be sequentially increasing like block numbers. In a current BFT consensus protocol, a timestamp of a block is determined by a proposal initiator. If the proposal initiator is malicious, temporal orderliness of an entire chain of blocks is destroyed. In addition, for some blockchain services that require time tracing, service decisions can be executed only when timestamps of blocks are correct. Under this circumstance, this article aims to provide a technical solution suitable for the BFT consensus protocol to ensure that a timestamp of a new block increases progressively with respect to a timestamp of a previous block.

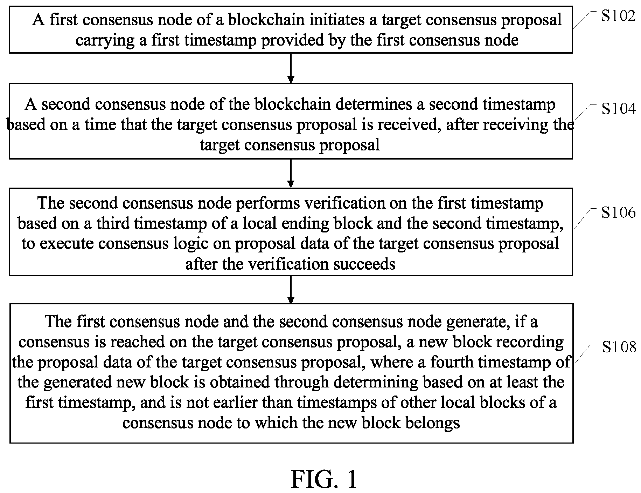

FIG. 1 is a flowchart of a method for block generation, according to an embodiment of this specification. The method shown in FIG. 1 may be performed by a corresponding apparatus below, and includes the following steps.

S102. A first consensus node of a blockchain initiates a target consensus proposal carrying a first timestamp provided by the first consensus node.

Like the conventional BFT consensus protocol, the first consensus node may add the first timestamp proposed by the first consensus node to the target consensus proposal. If a consensus is reached on the target consensus proposal, the first timestamp is used for determining a timestamp of a new block. In this embodiment of this specification, to avoid a malicious behavior of the first consensus node, another node needs to verify the first timestamp subsequently.

S104. A second consensus node of the blockchain determines a second timestamp based on a time that the target consensus proposal is received, after receiving the target consensus proposal.

For example, in this step, after receiving the target consensus proposal, the second consensus node may determine a current timestamp of a local system, and determine the current timestamp as the second timestamp.

S106. The second consensus node performs verification on the first timestamp based on a third timestamp of a local ending block and the second timestamp, to execute consensus logic on proposal data of the target consensus proposal after the verification succeeds.

It should be understood that, if the first consensus node provides the first timestamp according to a requirement of sequentially increasing timestamps of blocks, the first timestamp should be later than a timestamp of an ending block of each consensus node and earlier than a time at which another consensus node receives the target consensus proposal. Therefore, the second consensus node may perform verification on the first timestamp based on this feature. If the first timestamp is earlier than the second timestamp and later than the third timestamp, the verification succeeds. Otherwise, the verification fails, and the target consensus proposal proposed by the first consensus node may be directly rejected.

S108. The first consensus node and the second consensus node generate, if a consensus is reached on the target consensus proposal, a new block recording the proposal data of the target consensus proposal, where a fourth timestamp of the generated new block is obtained through determining based on at least the first timestamp, and is not earlier than timestamps of other local blocks of a consensus node to which the new block belongs.

Currently, commonly used BFT consensus protocols mainly include a PBFT consensus protocol and a Honey Badger BFT consensus protocol.

In the Honey Badger BFT consensus protocol, in each round of consensus, all consensus nodes can initiate a consensus proposal. Therefore, the generated new block records proposal data of all consensus proposals on which consensuses are reached in a consensus stage. The corresponding fourth timestamp may be obtained through determining based on timestamps of all the consensus proposals on which consensuses are reached in the consensus stage, where the timestamps of all the consensus proposals include the first timestamp. For example, the fourth timestamp is a median value of the timestamps of all the consensus proposals on which consensuses are reached in the consensus stage.

In the PBFT consensus protocol, consensus nodes need to be divided into primary consensus nodes and backup consensus nodes. In each round of consensus, only the primary consensus nodes can initiate consensus proposals. Therefore, the fourth timestamp of the generated new block may directly adopt the first timestamp.

Based on the method for block generation shown in FIG. 1, in the solutions of the embodiments of this specification, when a target consensus node initiates a target consensus proposal, the target consensus proposal carries a first timestamp provided by the target consensus node. After receiving the target consensus proposal, another consensus node performs, based on a second timestamp of a local current moment and a third timestamp of a local ending block, verification on the first timestamp provided by the target consensus node, and after the verification succeeds, executes consensus logic on proposal data of the target consensus proposal. If a consensus is reached, each consensus node generates a new block of a fourth timestamp that is determined based on the first timestamp, to record the proposal data in the target consensus proposal. The entire solution can effectively ensure that a timestamp of a new block increases progressively with respect to a timestamp of a previous block, so that blocks in a blockchain are in an order of a time dimension, thereby ensuring that some blockchain services requiring time tracing can correctly execute service decisions.

The following describes the method for block generation according to the embodiments of this specification in detail.

### Application scenario 1

In this application scenario 1, a blockchain adopts a Honey Badger BFT consensus protocol. As described above, the Honey Badger BFT consensus protocol requires all consensus nodes to initiate respective consensus proposals in the consensus nodes. Therefore, a new block records proposal data of all consensuses reached in a current consensus stage, and a timestamp of the new block is obtained through determining based on timestamps carried in all consensus proposals on which consensuses are reached.

The Honey Badger BFT consensus protocol includes a reliable broadcast (RBC) protocol stage and a binary agreement (BA) protocol stage. In this application scenario 1, a consensus node verifies a timestamp in a consensus proposal after the RBC protocol stage is completed and before the BA protocol stage is entered. A block generation procedure includes the following steps.

5201. A first consensus node of a blockchain initiates a target consensus proposal carrying a first timestamp in an RBC protocol stage.

In this step, the first consensus node obtains a fifth timestamp related to a current time of a local system and a sixth timestamp of a local ending block. The fifth timestamp related to the current time herein may be a timestamp of the current time, or may be a timestamp close to the current time, or may be a timestamp determined based on the current time.

If the fifth timestamp is later than the sixth timestamp, the first consensus node uses the fifth timestamp as the first timestamp, and initiates the target consensus proposal carrying the first timestamp.

If the fifth timestamp is earlier than the sixth timestamp, the first consensus node determines the first timestamp based on a preset rule, and initiates the target consensus proposal carrying the first timestamp, where the first timestamp determined based on the preset rule is obtained by adding a unit time T to the sixth timestamp.

It should be understood that, in the RBC protocol stage, each consensus node needs to broadcast its own consensus proposal to other consensus nodes, and accepts consensus proposals initiated by other nodes. Other consensus proposals (except the target consensus proposal) are not described in detail again herein.

S202. Each consensus node performs a verification procedure of the RBC protocol stage.

In the verification procedure of the RBC protocol stage, each consensus node reconstructs a Merkel tree based on consensus proposal information (that is, echo information) of other consensus nodes, and performs verification on the reconstructed Merkel tree. After the verification succeeds, the consensus node broadcasts a Ready message to other nodes. For any consensus node, after receiving f+1 same Ready messages (where f is a quantity of malicious nodes in a consortium blockchain) from different nodes, the consensus node determines whether the consensus node itself broadcasts any Ready message, and if no, the consensus node broadcasts a Ready message. After receiving 2f+1 same Ready messages from different nodes, the consensus node determines that the consensus node receives correct consensus proposals initiated by other consensus nodes.

S203. After the procedure of the RBC protocol stage is completed, other consensus nodes including a second consensus node determine a second timestamp based on a time that the target consensus proposal is received, and obtain a third timestamp based on a local ending block.

S204. Other consensus nodes including the second consensus node perform verification on the first timestamp based on the second timestamp and the third timestamp. If the first timestamp is earlier than the second timestamp and later than the third timestamp, the verification succeeds, and S206 is performed. Otherwise, the verification fails, and S205 is performed.

S205. Other consensus nodes including the second consensus node set a BA value of the target consensus proposal in the protocol stage to 0.

The target consensus proposal cannot pass this round of consensus when the BA value is 0.

S206. Each consensus node performs a procedure of the BA protocol stage.

A BA protocol is a protocol in which all consensus nodes agree on a single consensus proposal in a cluster. Only a consensus proposal with a BA value of 1 is to be included in a final consensus result, and proposal data of the consensus protocol is to be successfully uploaded to the blockchain.

S207. Each consensus node combines timestamps in all consensus proposals with a BA value of 1 into one set, and determines a median value of all the timestamps in the set as a fourth timestamp.

In addition, if the set is empty due to special reasons, for example, a consensus node provides, in the consensus proposal, a timestamp that can be parsed, the consensus node may alternatively use the third timestamp of the local ending block plus a unit time T as a fourth timestamp of a new block.

S208. Each consensus node generates a new block of the fourth timestamp, where the new block records proposal data of all proposals on which consensuses are reached in a current consensus stage.

### Application scenario 2

In this application scenario 2, a blockchain adopts a PBFT consensus protocol. As described above, the PBFT consensus protocol requires that only a primary consensus node can initiate a consensus proposal. Therefore, a new block records only proposal data of a consensus proposal initiated by the primary consensus node. If a timestamp provided by the primary consensus node in the consensus proposal is successfully verified, the timestamp provided by the primary consensus node may be directly used as a timestamp of the new block.

Different from the foregoing Honey Badger BFT consensus protocol, the PBFT consensus protocol mainly includes: a pre-prepare stage, a prepare stage, and a commit stage. In this application scenario 2, backup consensus nodes (that is, the foregoing second consensus nodes) verify, in the pre-prepare stage, a first timestamp in a target consensus proposal initiated by the primary consensus node (that is, the foregoing first consensus node).

A block generation procedure includes:
a first consensus node of a blockchain initiates a target consensus proposal carrying a first timestamp.

A consensus process includes:
a pre-prepare stage.

The primary consensus node receives a request from a client, and allocates a number to the request. Then, the primary consensus node broadcasts a pre-prepare message to the backup consensus node. The pre-prepare message includes the number of the request, a view in which the request is located, and a digest of the primary consensus node. In addition, a request for invoking a specified smart contract is broadcast, and this request indicates an address of the smart contract.

After receiving the pre-prepare message, each backup consensus node determines whether the backup consensus node agrees on the number n allocated by the primary consensus node to the request, that is, confirms whether to accept the pre-prepare message.

If each backup consensus node accepts the pre-prepare message, the backup consensus node invokes the specified smart contract, determines a second timestamp according to logic of the specified smart contract based on a time that the target consensus proposal is received, obtains a third timestamp based on a local ending block, and then performs verification on the first timestamp based on the second timestamp and the third timestamp.

If the verification succeeds, a prepare stage is entered. If the verification fails, the target consensus proposal is directly returned, and the consensus procedure ends.

The prepare stage.

Each of all backup consensus nodes participating in the consensus checks whether a pre-prepare message is legitimate after receiving the pre-prepare message. If the pre-prepare message is legitimate, a state of the consensus proposal on a replica is determined as prepared, and the backup consensus node adds the pre-prepare message to a local log, and sends a prepare message to other backup consensus nodes participating in the consensus.

A commit stage.

After entering the prepared state, each of all consensus nodes sends a commit message to the other consensus nodes, and adds, to a local log (representing approval of the consensus node itself), the commit message sent by the consensus node itself. When a consensus node finds that a quorum (a quorum is a set of a certain quantity of replicas required to meet a requirement for consistency of all replica data and a fault tolerance requirement) agrees to the number allocation, the consensus node broadcasts a commit message to all other nodes. In addition, commit messages from other nodes are received one after another. If each node receives 2f+1 (f is a quantity of malicious nodes in a consortium blockchain) commit messages (including one from the node itself, where the commits from different nodes carry a same number n and view v), it indicates that the consensus node has a certificate named committed certificate, and the request reaches a committed state on this consensus node. In this case, it can be determined, merely through this consensus node, that the request has reached a prepared state in a quorum, that is, all consensus nodes of a same quorum agree to allocation of the number n. After the request initiated by the client reaches the committed state, it indicates that a consensus has been reached on an entire network.

### Application scenario 3

In this application scenario 3, a blockchain adopts a PBFT consensus protocol. Backup consensus nodes (that is, the second consensus nodes described above) verify a first timestamp in a target consensus proposal initiated by a primary consensus node (that is, the first consensus node described above) in a prepare stage. A block generation procedure includes:
a first consensus node of a blockchain initiates a target consensus proposal carrying a first timestamp.

A consensus process includes:
a pre-prepare stage.

The primary consensus node receives a request from a client, and allocates a number to the request. Then, the primary consensus node broadcasts a pre-prepare message to the backup consensus node. The pre-prepare message includes the number of the request, a view in which the request is located, and a digest of the primary consensus node.

After receiving the pre-prepare message, each backup consensus node determines whether the backup consensus node agrees on the number n allocated by the primary consensus node to the request, that is, confirms whether to accept the pre-prepare message. If each backup consensus node accepts the pre-prepare message, a prepare stage is entered.

### The prepare stage

After receiving the pre-prepare message, each of all backup consensus nodes participating in the consensus invokes a specified smart contract deployed in a consortium blockchain in advance, determines a second timestamp according to logic of the specified smart contract based on a time that the target consensus proposal is received, obtains a third timestamp based on a local ending block, and then performs verification on the first timestamp based on the second timestamp and the third timestamp.

If the verification on the first timestamp fails, the current target consensus proposal is directly returned, and the consensus procedure ends.

If the verification succeeds, whether the pre-prepare message is legitimate is checked. If the pre-prepare message is legitimate, a state of the consensus proposal on a replica is determined as prepared, and the backup consensus node adds the pre-prepare message to a local log, and sends a prepare message to other backup consensus nodes.

### A commit stage.

After entering the prepared state, each of all consensus nodes sends a commit message to the other consensus nodes, and adds, to a local log, the commit message sent by the consensus node itself. When a consensus node finds that a quorum agrees to the number allocation, the consensus node broadcasts a commit message to all other nodes. In addition, commit messages from other nodes are received one after another. If each node receives 2f+1 commit messages, it indicates that the consensus node has a certificate named committed certificate, and the request reaches a committed state on this consensus node. In this case, it can be determined, merely through this consensus node, that the request has reached a prepared state in a quorum, that is, all consensus nodes of a same quorum agree to allocation of the number n. After the request initiated by the client reaches the committed state, it indicates that a consensus has been reached on an entire network.

It can be learned from the foregoing application scenario 2 and application scenario 3 that, in a consensus process of a conventional PBFT algorithm, backup consensus nodes start to execute consensus logic in a pre-prepare stage, that is, the backup consensus nodes check, in the pre-prepare stage, whether a first timestamp sent by a primary consensus node is legitimate. Therefore, a step of service verification performed by the backup consensus nodes may be performed before checking a pre-prepare message. Once a first timestamp fails to pass the verification of the backup consensus nodes, execution of subsequent consensus logic is rejected, thereby avoiding unnecessary resource overheads.

The method according to the embodiments of this specification is introduced as above. It should be understood that appropriate changes can further be made without departing from the foregoing principles herein, and these changes should also be regarded as the protection scope of the embodiments of this specification.

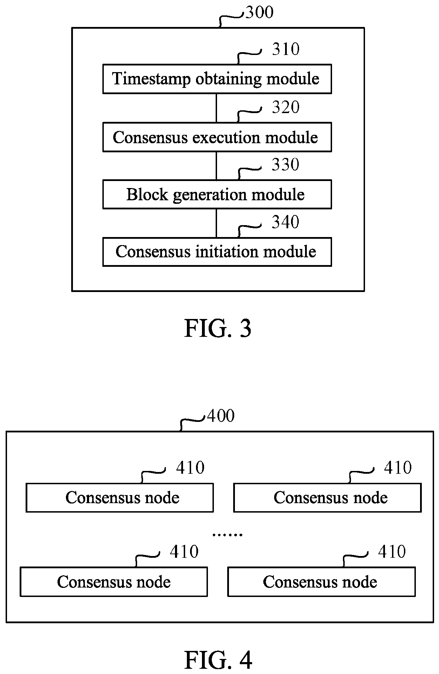

Corresponding to the foregoing method for block generation, an embodiment of this specification further provides a consensus node of a blockchain. FIG. 3 is a schematic structural diagram of a consensus node 300, including:
a timestamp obtaining module 310, configured to determine, after a target consensus proposal initiated by another consensus node of the blockchain is received, a second timestamp based on a time that the target consensus proposal is received, where the target consensus proposal carries a first timestamp provided by the another consensus node;
a consensus execution module 320, configured to perform verification on the first timestamp based on a third timestamp of a local ending block and the second timestamp, to execute consensus logic on proposal data of the target consensus proposal after the verification succeeds;
a block generation module 330, configured to generate, if a consensus is reached on the target consensus proposal, a new block recording the proposal data of the target consensus proposal, where a fourth timestamp of the generated new block is obtained through determining based on at least the first timestamp, and is not earlier than timestamps of other local blocks; and
a consensus initiation module 340, configured to: if a consensus proposal needs to be initiated based on a consensus protocol of the blockchain, initiate a consensus proposal carrying a locally provided timestamp.

When a consensus node in this embodiment of this specification receives a target consensus proposal initiated by another node, the consensus node performs, based on a second timestamp of a local current moment and a third timestamp of a local ending block, verification on a first timestamp provided by the another node and carried in a target consensus node, and after the verification succeeds, executes consensus logic on proposal data of the target consensus proposal. If a consensus is reached, a new block of a fourth timestamp determined based on the first timestamp is locally generated, to record the proposal data in the target consensus proposal. The entire solution can effectively ensure that a timestamp of a new block increases progressively with respect to a timestamp of a previous block, so that blocks in a blockchain are in an order of a time dimension, thereby ensuring that some blockchain services requiring time tracing can correctly execute service decisions.

Optionally, during execution by the consensus execution module 320, if the first timestamp is earlier than the second timestamp and later than the third timestamp, the verification succeeds. Otherwise, the verification fails.

Optionally, during execution by the consensus initiation module 340, a fifth timestamp related to a current time and a sixth timestamp of the local ending block are obtained. If the fifth timestamp is later than the sixth timestamp, a consensus proposal carrying the fifth timestamp is initiated. If the fifth timestamp is earlier than the sixth timestamp, a consensus proposal carrying a seventh timestamp is initiated, where the seventh timestamp is obtained by adding a unit time to the sixth timestamp.

Optionally, the blockchain adopts a consensus protocol based on a Honey Badger Byzantine Fault Tolerance algorithm, and a consensus stage to which the target consensus proposal belongs further includes consensus proposals initiated by different other consensus nodes. The generated new block records proposal data of all consensus proposals on which consensuses are reached in the consensus stage, and the fourth timestamp is obtained through determining based on timestamps of all the consensus proposals on which consensuses are reached in the consensus stage, where the timestamps of all the consensus proposals include the first timestamp. For example, the fourth timestamp is a median value of the timestamps of all the consensus proposals on which consensuses are reached in the consensus stage.

Optionally, the consensus execution module 320 verifies the first timestamp based on the third timestamp of the local ending block and the second timestamp after an RBC protocol stage of the Honey Badger Byzantine Fault Tolerance algorithm is completed and before a BA protocol stage is entered. In addition, if the first timestamp is not successfully verified, the consensus execution module 320 sets a BA value of the target consensus proposal in the BA protocol stage to 0.

Optionally, the blockchain adopts a consensus protocol of a practical Byzantine Fault Tolerance algorithm, the first consensus node is a primary consensus node of the blockchain, and the fourth timestamp is equal to the first timestamp. The consensus execution module 320 may verify the first timestamp in a pre-prepare stage or a prepare stage of the practical Byzantine Fault Tolerance algorithm based on the third timestamp of the local ending block and the second timestamp.

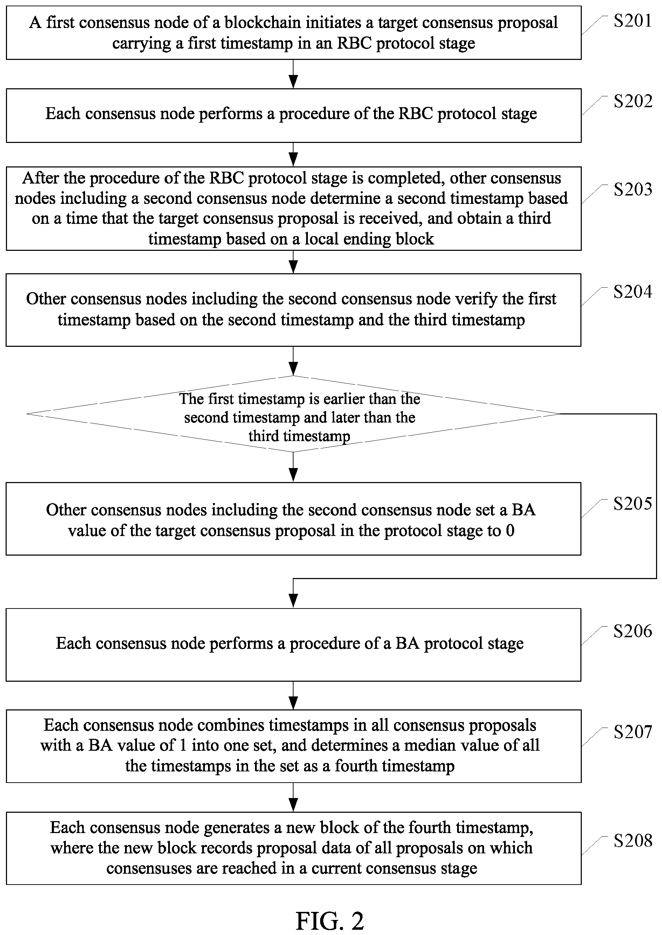

It should be understood that, the consensus node in this embodiment of this specification can serve as an entity for performing the method for block generation shown in FIG. 1, and therefore, can implement the steps and functions of the method for block generation that are implemented in FIG. 1 and FIG. 2. Because the principles are the same, details are not described herein again.

Corresponding to the foregoing method for block generation, an embodiment of this specification further provides a blockchain system. FIG. 4 is a schematic structural diagram of the blockchain system 400, including a plurality of consensus nodes 410. At least one of the plurality of consensus nodes 410 performs the following steps after receiving a target consensus proposal initiated by another consensus node 410 of a blockchain:
determining a second timestamp based on a time that the target consensus proposal is received, where the target consensus proposal carries a first timestamp provided by the another consensus node; and performing verification on the first timestamp based on a third timestamp of a local ending block and the second timestamp, to execute consensus logic on proposal data of the target consensus proposal after the verification succeeds; and
generating, if a consensus is reached on the target consensus proposal, a new block recording the proposal data of the target consensus proposal, where a fourth timestamp of the generated new block is obtained through determining based on at least the first timestamp, and is not earlier than timestamps of other local blocks; and
if a consensus proposal needs to be initiated based on a consensus protocol of the blockchain, initiating a consensus proposal carrying a locally provided timestamp.

Apparently, the blockchain system in this embodiment of this specification can implement the steps and functions of the method for block generation shown in FIG. 1. Because the principles are the same, details are not described herein again.

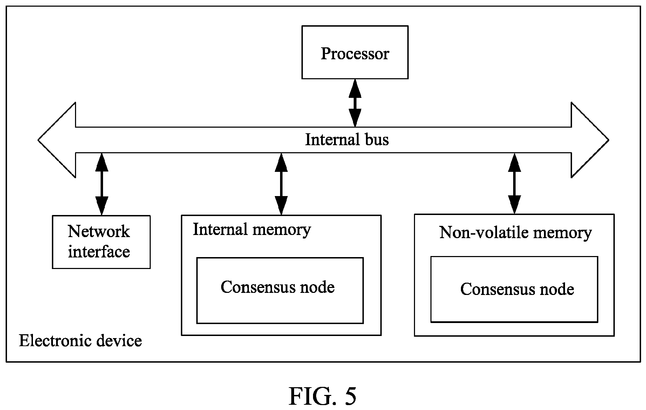

FIG. 5 is a schematic structural diagram of an electronic device, according to an embodiment of this specification. Referring to FIG. 5, in terms of the hardware, the electronic device includes a processor, and optionally includes an internal bus, a network interface, and a memory. The memory may include an internal memory, such as a high-speed random access memory (RAM), and may further include a non-volatile memory, such as at least one disk storage. Definitely, the electronic device may further include hardware required for other services.

The processor, the network interface, and the memory may be connected to each other through an internal bus. The internal bus may be an industry standard architecture (ISA) bus, a peripheral component interconnect (PCI) bus, an extended industry standard architecture (EISA) bus, or the like. The bus may be classified as an address bus, a data bus, a control bus, or the like. For ease of indication, only one bidirectional arrow is used for indication in FIG. 5, but it does not mean that there is only one bus or one type of bus.

The memory is configured to store a program. For example, the program may include a program code. The program code includes a computer operation instruction. The memory may include an internal memory and a non-volatile memory, and provide an instruction and data to the processor.

The processor reads a corresponding computer program from the non-volatile memory into the internal memory and then runs the computer program, to form the consensus node shown in FIG. 3 at a logical level. The processor executes the program stored in the memory and is configured to perform the following operations:
determining, after a target consensus proposal initiated by another consensus node of a blockchain is received, a second timestamp based on a time that the target consensus proposal is received, where the target consensus proposal carries a first timestamp provided by the another consensus node;
performing verification on the first timestamp based on a third timestamp of a local ending block and the second timestamp, to execute consensus logic on proposal data of the target consensus proposal after the verification succeeds;
generating, if a consensus is reached on the target consensus proposal, a new block recording the proposal data of the target consensus proposal, where a fourth timestamp of the generated new block is obtained through determining based on at least the first timestamp, and is not earlier than timestamps of other local blocks; and
if a consensus proposal needs to be initiated based on a consensus protocol of the blockchain, initiating a consensus proposal carrying a locally provided timestamp.

The foregoing method for block generation disclosed in the embodiment shown in FIG. 1 of this specification may be applied to the processor or implemented by the processor. The processor may be an integrated circuit chip, and has a signal processing capability. During implementation, the steps of the foregoing method may be completed through an integrated logic circuit of hardware or an instruction in the form of software in the processor. The foregoing processor may be a general-purpose processor, including a central processing unit (CPU), a network processor (NP), or the like; and may further be a digital signal processor (DSP), an application specific integrated circuit (ASIC), a field-programmable gate array (FPGA), or other programmable logic devices, a discrete gate or a transistor logic device, or a discrete hardware component. The methods, steps, and logical block diagrams disclosed in the embodiments of this specification may be implemented or performed. The general-purpose processor may be a microprocessor, or the processor may be any conventional processor and the like. The steps of the method disclosed in combination with the embodiments of this specification may be directly embodied as being performed by a hardware decoding processor, or performed by a combination of hardware and software modules in the decoding processor. The software module may be stored in a storage medium that is mature in the art, such as a random access memory (RAM), a flash memory, a read-only memory (ROM), a programmable ROM, an electrically erasable programmable memory, or a register. The storage medium is located in the memory. The processor reads information in the memory and completes the steps of the foregoing methods in combination with hardware thereof.

It should be understood that the electronic devices according to the embodiments of this specification can implement the functions of the embodiments of the consensus node shown in FIG. 1 and FIG. 2. Because the principles are the same, details are not described herein again.

Definitely, in addition to the software implementation, the electronic device of this specification does not exclude other implementations, such as a logic device or a combination of software and hardware. In other words, an entity for performing the following processing flow is not limited to each logic unit, but further limited to the hardware or logic device.

In addition, an embodiment of this specification further proposes a computer-readable storage medium storing one or more programs. The one or more programs include an instruction. When the instruction is executed by a portable electronic device including a plurality of application programs, the portable electronic device can perform the method for block generation shown in the embodiment of FIG. 1 and can be configured to perform the following steps:
determining, after a target consensus proposal initiated by another consensus node of a blockchain is received, a second timestamp based on a time that the target consensus proposal is received, where the target consensus proposal carries a first timestamp provided by the another consensus node;
performing verification on the first timestamp based on a third timestamp of a local ending block and the second timestamp, to execute consensus logic on proposal data of the target consensus proposal after the verification succeeds;
generating, if a consensus is reached on the target consensus proposal, a new block recording the proposal data of the target consensus proposal, where a fourth timestamp of the generated new block is obtained through determining based on at least the first timestamp, and is not earlier than timestamps of other local blocks; and
if a consensus proposal needs to be initiated based on a consensus protocol of the blockchain, initiating a consensus proposal carrying a locally provided timestamp.

It should be understood that, when the foregoing instruction is executed by the portable electronic device that includes the plurality of application programs, for the consensus node described above to implement the functions of the embodiments shown in FIG. 1 and FIG. 2. Because the principles are the same, details are not described herein again.

A person skilled in the art should understand that the embodiments of this specification may be provided as a method, a system, or a computer program product. Therefore, this specification may use a form of hardware only embodiments, software only embodiments, or embodiments with a combination of software and hardware. Moreover, this specification may use a form of a computer program product that is implemented on one or more computer-usable storage media (including but not limited to a disk memory, a CD-ROM, an optical memory, and the like) that include computer-usable program code.

Embodiments of this specification are described above. Other embodiments fall within the scope of the appended claims. In some embodiments, the actions or steps recorded in the claims may be performed in sequences different from those in the embodiments and an expected result may still be achieved. In addition, the processes depicted in the accompanying drawings is not necessarily performed in the specific order or successively to achieve an expected result. In some implementations, multitasking and parallel processing may be feasible or beneficial.

The descriptions are merely embodiments of this application, and are not intended to limit the embodiments of this application. For a person skilled in the art, various modifications and changes may be made to this application. Any modifications, equivalent replacements, and improvements made within the spirit and principle of this application shall fall within the scope of the claims of this application. In addition, all other embodiments obtained by a person of ordinary skill in the art without creative efforts shall fall within the protection scope of this specification.

## Claims

1. A method for block generation, comprising:
initiating (S102), by a first consensus node of a blockchain, a target consensus proposal carrying a first timestamp provided by the first consensus node;
determining (S104), by a second consensus node of the blockchain after receiving the target consensus proposal, a second timestamp based on a time that the target consensus proposal is received;
performing (S106), by the second consensus node, verification on the first timestamp based on a third timestamp of a local ending block of a copy of the blockchain at the second consensus node and the second timestamp to execute consensus logic on proposal data of the target consensus proposal after the verification succeeds, wherein the verification succeeds if the first timestamp is earlier than the second timestamp and later than the third timestamp; and
generating (S108), by the first consensus node and the second consensus node if a consensus is reached on the target consensus proposal, a new block recording the proposal data of the target consensus proposal, wherein a fourth timestamp of the generated new block is obtained through determining based on at least the first timestamp, and is not earlier than timestamps of other local blocks of a copy of the blockchain at a consensus node to which the new block belongs,
wherein the blockchain adopts a consensus protocol based on a Honey Badger Byzantine Fault Tolerance algorithm, and a consensus stage to which the target consensus proposal belongs further comprises a consensus proposal initiated by the second consensus node, wherein the generated new block records proposal data of a plurality of consensus proposals on which consensuses are reached in the consensus stage, and the fourth timestamp is obtained through determining based on timestamps of the plurality of the consensus proposals on which consensuses are reached in the consensus stage, wherein the timestamps of the plurality of the consensus proposals comprise the first timestamp, and
wherein the fourth timestamp is a median value of the timestamps of the plurality of the consensus proposals on which consensuses are reached in the consensus stage.

2. The method according to claim 1, comprising:
the initiating, by the first consensus node of the blockchain, the target consensus proposal carrying the first timestamp provided by the first consensus node comprises:
obtaining, by the first consensus node of the blockchain when preparing to initiate the target consensus proposal, a fifth timestamp related to a current time and a sixth timestamp of a local ending block of a copy of the blockchain at the first consensus node; and
if the fifth timestamp is later than the sixth timestamp, using, by the first consensus node, the fifth timestamp as the first timestamp, and initiating the target consensus proposal carrying the first timestamp; or
if the fifth timestamp is earlier than the sixth timestamp, determining, by the first consensus node, the first timestamp based on a preset rule, and initiating the target consensus proposal carrying the first timestamp, wherein the first timestamp determined based on the preset rule is obtained by adding a unit time to the sixth timestamp.

3. The method according to claim 1, wherein:
the second consensus node of the blockchain verifies the first timestamp based on the third timestamp of the local ending block and the second timestamp after a reliable broadcast (RBC) protocol stage of the Honey Badger Byzantine Fault Tolerance algorithm is completed and before a binary agreement (BA) protocol stage is entered.

4. The method according to claim 1, further comprising:
if the first timestamp is not successfully verified, the second consensus node sets a BA value of the target consensus proposal in a BA protocol stage to 0, to cause a failure to reach a consensus on the target consensus proposal.

5. The method according to claim 1, wherein:
the blockchain adopts a consensus protocol of a practical Byzantine Fault Tolerance algorithm, the first consensus node is a primary consensus node of the blockchain, and the fourth timestamp is equal to the first timestamp.

6. The method according to claim 5, wherein:
the second consensus node of the blockchain verifies the first timestamp in a pre-prepare stage or a prepare stage of the practical Byzantine Fault Tolerance algorithm based on the third timestamp of the local ending block and the second timestamp.

7. A blockchain system (400) including a plurality of consensus nodes (410), configured to perform a method according to any one of the preceding claims.

## Patentansprüche

1. Verfahren zur Blockerzeugung, umfassend:
Initiieren (S102), durch einen ersten Konsensknoten einer Blockchain, eines Zielkonsensvorschlags, der einen ersten Zeitstempel trägt, der durch den ersten Konsensknoten bereitgestellt wird;
Bestimmen (S104), durch einen zweiten Konsensknoten der Blockchain nach Empfangen des Zielkonsensvorschlags, eines zweiten Zeitstempels basierend auf einer Zeit, zu der der Zielkonsensvorschlag empfangen wird;
Durchführen (S106), durch den zweiten Konsensknoten, einer Verifikation an dem ersten Zeitstempel basierend auf einem dritten Zeitstempel eines lokalen Endblocks einer Kopie der Blockchain an dem zweiten Konsensknoten und dem zweiten Zeitstempel, um eine Konsenslogik auf Vorschlagsdaten des Zielkonsensvorschlags auszuführen, nachdem die Verifikation erfolgreich ist, wobei die Verifikation erfolgreich ist, wenn der erste Zeitstempel früher als der zweite Zeitstempel und später als der dritte Zeitstempel ist; und
Erzeugen (S108), durch den ersten Konsensknoten und den zweiten Konsensknoten, wenn ein Konsens über den Zielkonsensvorschlag erreicht wird, eines neuen Blocks, der die Vorschlagsdaten des Zielkonsensvorschlags aufzeichnet, wobei ein vierter Zeitstempel des erzeugten neuen Blocks durch Bestimmen basierend auf mindestens dem ersten Zeitstempel erhalten wird und nicht früher als Zeitstempel anderer lokaler Blöcke einer Kopie der Blockchain an einem Konsensknoten ist, zu dem der neue Block gehört,
wobei die Blockchain ein Konsensprotokoll basierend auf einem Honey-Badger-Byzantine-Fault-Tolerance-Algorithmus einsetzt und eine Konsensstufe, zu der der Zielkonsensvorschlag gehört, ferner einen Konsensvorschlag umfasst, der durch den zweiten Konsensknoten initiiert wird, wobei der erzeugte neue Block Vorschlagsdaten einer Vielzahl von Konsensvorschlägen aufzeichnet, über die Konsense in der Konsensstufe erreicht werden, und der vierte Zeitstempel durch Bestimmen basierend auf Zeitstempeln der Vielzahl der Konsensvorschläge erhalten wird, über die Konsense in der Konsensstufe erreicht werden, wobei die Zeitstempel der Vielzahl der Konsensvorschläge den ersten Zeitstempel umfassen, und
wobei der vierte Zeitstempel ein Medianwert der Zeitstempel der Vielzahl der Konsensvorschläge ist, über die Konsense in der Konsensstufe erreicht werden.

2. Verfahren nach Anspruch 1, umfassend:
das Initiieren, durch den ersten Konsensknoten der Blockchain, des Zielkonsensvorschlags, der den ersten Zeitstempel trägt, der durch den ersten Konsensknoten bereitgestellt wird, umfasst:
Erhalten, durch den ersten Konsensknoten der Blockchain beim Vorbereiten, den Zielkonsensvorschlag zu initiieren, eines fünften Zeitstempels in Bezug auf eine aktuelle Zeit und eines sechsten Zeitstempels eines lokalen Endblocks einer Kopie der Blockchain an dem ersten Konsensknoten; und
wenn der fünfte Zeitstempel später als der sechste Zeitstempel ist, Verwenden, durch den ersten Konsensknoten, des fünften Zeitstempels als den ersten Zeitstempel und Initiieren des Zielkonsensvorschlags, der den ersten Zeitstempel trägt; oder
wenn der fünfte Zeitstempel früher als der sechste Zeitstempel ist, Bestimmen, durch den ersten Konsensknoten, des ersten Zeitstempels basierend auf einer voreingestellten Regel und Initiieren des Zielkonsensvorschlags, der den ersten Zeitstempel trägt, wobei der erste Zeitstempel, der basierend auf der voreingestellten Regel bestimmt wird, durch Hinzufügen einer Zeiteinheit zu dem sechsten Zeitstempel erhalten wird.

3. Verfahren nach Anspruch 1, wobei:
der zweite Konsensknoten der Blockchain den ersten Zeitstempel basierend auf dem dritten Zeitstempel des lokalen Endblocks und dem zweiten Zeitstempel verifiziert, nachdem eine zuverlässige Rundsende-Protokollstufe (RBC-Protokollstufe) des Honey-Badger-Byzantine-Fault-Tolerance-Algorithmus abgeschlossen ist und bevor eine binäre Vereinbarungsprotokollstufe (BA-Protokollstufe) eintritt.

4. Verfahren nach Anspruch 1, ferner umfassend:
wenn der erste Zeitstempel nicht erfolgreich verifiziert wird, setzt der zweite Konsensknoten einen BA-Wert des Zielkonsensvorschlags in einer BA-Protokollstufe auf 0, um zu bewirken, dass kein Konsens über den Zielkonsensvorschlag erreicht wird.

5. Verfahren nach Anspruch 1, wobei:
die Blockchain ein Konsensprotokoll eines praktischen Byzantine-Fault-Tolerance-Algorithmus einsetzt, der erste Konsensknoten ein primärer Konsensknoten der Blockchain ist und der vierte Zeitstempel gleich dem ersten Zeitstempel ist.

6. Verfahren nach Anspruch 5, wobei:
der zweite Konsensknoten der Blockchain den ersten Zeitstempel in einer Vor-Vorbereitungsstufe oder einer Vorbereitungsstufe des praktischen Byzantine-Fault-Tolerance-Algorithmus basierend auf dem dritten Zeitstempel des lokalen Endblocks und dem zweiten Zeitstempel verifiziert.

7. Blockchain-System (400), das eine Vielzahl von Konsensknoten (410) aufweist, die eingerichtet sind, ein Verfahren nach einem der vorhergehenden Ansprüche durchzuführen.

## Revendications

1. Procédé de génération de blocs, comprenant :
l'initiation (S102), par un premier noeud de consensus d'une chaîne de blocs, d'une proposition de consensus cible portant une première estampille temporelle fournie par le premier noeud de consensus ;
la détermination (S104), par un deuxième noeud de consensus de la chaîne de blocs après réception de la proposition de consensus cible, d'une deuxième estampille temporelle sur la base d'un moment où la proposition de consensus cible est reçue ;
l'exécution (S106), par le deuxième noeud de consensus, d'une vérification sur la première estampille temporelle sur la base d'une troisième estampille temporelle d'un bloc de fin local d'une copie de la chaîne de blocs au niveau du deuxième noeud de consensus et de la deuxième estampille temporelle pour exécuter une logique de consensus sur des données de proposition de la proposition de consensus cible après que la vérification a réussi, dans lequel la vérification réussit si la première estampille temporelle est antérieure à la deuxième estampille temporelle et postérieure à la troisième estampille temporelle ; et
la génération (S108), par le premier noeud de consensus et le deuxième noeud de consensus si un consensus est atteint sur la proposition de consensus cible, d'un nouveau bloc enregistrant les données de proposition de la proposition de consensus cible, dans lequel une quatrième estampille temporelle du nouveau bloc généré est obtenue par détermination sur la base d'au moins la première estampille temporelle, et n'est pas antérieure à des estampilles temporelles d'autres blocs locaux d'une copie de la chaîne de blocs au niveau d'un noeud de consensus auquel le nouveau bloc appartient,
dans lequel la chaîne de blocs adopte un protocole de consensus sur la base d'un algorithme de tolérance aux pannes byzantines de type Honey Badger, et une étape de consensus à laquelle la proposition de consensus cible appartient comprend en outre une proposition de consensus initiée par le deuxième noeud de consensus, dans lequel le nouveau bloc généré enregistre des données de proposition d'une pluralité de propositions de consensus sur lesquelles des consensus sont atteints à l'étape de consensus, et la quatrième estampille temporelle est obtenue par détermination sur la base d'estampilles temporelles de la pluralité des propositions de consensus sur lesquelles des consensus sont atteints à l'étape de consensus, dans lequel les estampilles temporelles de la pluralité des propositions de consensus comprennent la première estampille temporelle, et
dans lequel la quatrième estampille temporelle est une valeur médiane des estampilles temporelles de la pluralité des propositions de consensus sur lesquelles des consensus sont atteints à l'étape de consensus.

2. Procédé selon la revendication 1, comprenant :
l'initiation, par le premier noeud de consensus de la chaîne de blocs, de la proposition de consensus cible portant la première estampille temporelle fournie par le premier noeud de consensus comprend :
l'obtention, par le premier noeud de consensus de la chaîne de blocs lors de la préparation pour initier la proposition de consensus cible, d'une cinquième estampille temporelle liée à un moment actuel et d'une sixième estampille temporelle d'un bloc de fin local d'une copie de la chaîne de blocs au niveau du premier noeud de consensus ; et
si la cinquième estampille temporelle est postérieure à la sixième estampille temporelle, l'utilisation, par le premier noeud de consensus, de la cinquième estampille temporelle comme la première estampille temporelle, et l'initiation de la proposition de consensus cible portant la première estampille temporelle ; ou
si la cinquième estampille temporelle est antérieure à la sixième estampille temporelle, la détermination, par le premier noeud de consensus, de la première estampille temporelle sur la base d'une règle prédéfinie, et l'initiation de la proposition de consensus cible portant la première estampille temporelle, dans lequel la première estampille temporelle déterminée sur la base de la règle prédéfinie est obtenue en ajoutant une unité de temps à la sixième estampille temporelle.

3. Procédé selon la revendication 1, dans lequel :
le deuxième noeud de consensus de la chaîne de blocs vérifie la première estampille temporelle sur la base de la troisième estampille temporelle du bloc de fin local et de la deuxième estampille temporelle après qu'une étape de protocole de diffusion fiable (RBC) de l'algorithme de tolérance aux pannes byzantines de type Honey Badger est terminée et avant qu'une étape de protocole d'accord binaire (BA) ne soit entrée.

4. Procédé selon la revendication 1, comprenant en outre :
si la première estampille temporelle n'est pas vérifiée avec succès, le deuxième noeud de consensus règle une valeur BA de la proposition de consensus cible dans une étape de protocole BA à 0, pour provoquer un échec à atteindre un consensus sur la proposition de consensus cible.

5. Procédé selon la revendication 1, dans lequel :
la chaîne de blocs adopte un protocole de consensus d'un algorithme de tolérance aux pannes byzantines pratique, le premier noeud de consensus est un noeud de consensus primaire de la chaîne de blocs, et la quatrième estampille temporelle est égale à la première estampille temporelle.

6. Procédé selon la revendication 5, dans lequel :
le deuxième noeud de consensus de la chaîne de blocs vérifie la première estampille temporelle dans une étape de pré-préparation ou une étape de préparation de l'algorithme de tolérance aux pannes byzantines pratique sur la base de la troisième estampille temporelle du bloc de fin local et de la deuxième estampille temporelle.

7. Système de chaîne de blocs (400) incluant une pluralité de noeuds de consensus (410), configuré pour réaliser un procédé selon l'une quelconque des revendications précédentes.
